# EUROPÄISCHE PATENTSCHRIFT

(11) **EP 3 008 356 B1**
(45) Veröffentlichungstag und Bekanntmachung des Hinweises auf die Patenterteilung: **11.07.2018**
(21) Anmeldenummer: 14738722.9
(22) Anmeldetag: 20.05.2014
(51) Int. Cl.: F16D 13/64, F16D 13/70, B21D 53/88, B21D 35/00

(54) **VERFAHREN ZUR HERSTELLUNG EINER DRUCKPLATTE SOWIE DURCH DIESES VERFAHREN HERGESTELLTE DRUCKPLATTE**
METHOD FOR PRODUCING A PRESSURE PLATE AND PRESSURE PLATE PRODUCED BY SAID METHOD
PROCÉDÉ DE FABRICATION D'UN PLATEAU DE PRESSION AINSI QUE PLATEAU DE PRESSION FABRIQUÉ PAR CE PROCÉDÉ

(30) Priorität: 13.06.2013 DE 102013211068
(43) Veröffentlichungstag der Anmeldung: 20.04.2016
(73) Patentinhaber: Schaeffler Technologies AG & Co. KG, 91074 Herzogenaurach (DE)
(72) Erfinder: HOPPE, Marcus, 77855 Achern (DE)
(86) Internationale Anmeldenummer: PCT/DE2014/200223
(87) Internationale Veröffentlichungsnummer: WO 2014/198270

(56) Entgegenhaltungen:
- EP-A2- 2 141 377
- DE-A1- 3 802 955
- DE-A1-102009 032 823
- DE-A1-102011 087 379

## Beschreibung

Die Erfindung betrifft ein Verfahren zur Herstellung einer Druckplatte für eine Reibkupplung, gemäß dem Kennzeichen des Anspruchs 1, insbesondere für eine Trockenkupplung im Antriebsstrang eines Kraftfahrzeuges sowie eine Druckplatte hergestellt nach dem Verfahren.

Aus dem Stand der Technik sind Zentralplatten bekannt, die aus Guss hergestellt und anschließend in mehreren Schritten nachbearbeitet werden müssen. Zum einen muss nach dem Gießen der Lagersitz für das Stützlager derart spanend bearbeitet, dass eine Schulter entsteht, über welche die Einrückkräfte der Kupplungen über die Zentralplatte ins Stützlager eingeleitet werden können und zum anderen muss der Außenring des Stützlager an den Lagersitz angepasst werden. Diese Nachbearbeitungen der Zentralplatte und des Stützlagers sind sowohl zeit- als auch kostenintensiv. Alternativ wird in der gattungsbildenden DE 10 2011 087 379 ein Verfahren zur Herstellung einer Druckplatte oder einer Zwischendruckplatte für eine Reibungskupplung, insbesondere für eine Trockenkupplung im Antriebsstrang eines Kraftfahrzeuges offenbart, bei der die Druckplatte bzw. Zwischendruckplatte aus einem Blech gestanzt wird. Dabei entfallen die in den herkömmlichen Herstellungsverfahren eingesetzten nachträglichen Bearbeitungsschritte, wie beispielsweise das Überdrehen der Reibfläche, des Außendurchmessers, des Lagersitzes, der Nocken und der Blattfederauflageflächen, sowie das Bohren der Vernietungs- und Zentrierlöcher, wodurch der Herstellungsprozess der Druckplatte vereinfacht wird und Kosten eingespart werden. Als nachteilig erweist sich hierbei allerdings, dass bei der gestanzten bekannten Druckplatte aus Blech die Einrückkräfte nur unzureichend eingeleitet werden können. Bei einer gestanzten Druckplatte findet die Abstützung der Einrückkräfte über einen Sicherungsring statt, welcher sich in einer Nut am Lager befindet. Der Sicherungsring hat allerdings den Nachteil, das er zur Montage am Lager geschlitzt sein muss und daher bei hoher Drehzahl durch die Fliehkraft aufgehen wird, wodurch ein sicherer Betrieb nicht gewährleistet werden kann.

Die Aufgabe der vorliegenden Erfindung ist es, eine Druckplatte für eine Reibkupplung so auszubilden, das die oben genannten Nachteile verringert, bzw. vermeidet und dabei möglichst kostengünstig in ihrer Herstellung, ihrer Montage und ihrem Betrieb ist.

Zur Lösung dieser Aufgabe wird ein Verfahren zur Herstellung einer Druckplatte für eine Druckplattenbaugruppe einer Reibungskupplung, insbesondere für eine Trockenkupplung im Antriebsstrang eines Kraftfahrzeuges vorgeschlagen, gemäß dem Anspruch 1, wobei die Druckplatte aus einem Blech gestanzt wird, eine zentrale Ausnehmung als Lagersitz zur Aufnahme eines Lagers in die Druckplatte gestanzt wird und ein Absatz im Bereich der zentralen Ausnehmung zur Aufnahme eines Sicherungsringes des Lagers in die Druckplatte geprägt wird.

Auf diese Weise kann der Sicherungsring eines Lagers von dem Absatz derart aufgenommen werden, dass zum einen die Einrückkräfte der Kupplungen über die Zentralplatte ins Stützlager eingeleitet werden können und zum anderen der Sicherungsring unter Drehzahl durch die Fliehkraft nicht aufgehen kann.

Grundsätzlich kann die hergestellte Druckplatte auch als Zwischendruckplatte für eine Druckplattenbaugruppe einer Reibungskupplung verwendet werden.

Das Stanzen kann ein- oder mehrstufig durchgeführt werden, so dass die jeweilgen Verfahrensschritte des Austanzens der Druckplatte und des Ausstanzens der zentralen Ausnehmung jeweils getrennt voneinander oder in einer beliebigen Reihenfolge nacheinander erfolgen können. Sowohl die Druckplatte als auch die Ausnehmung können ein- oder mehrstufig gestanzt werden. Zusätzlich können Bereiche gleichzeitig gebogen oder anderweitig plastisch verformt werden, man spricht dann von Stanzbiegen.

Die Prägung der Druckplatte kann variabel erfolgen und ist zum einen von der Ausgestaltung des in die Druckplatte aufzunehmenden Lagers und zum anderen von dem am Lager angebrachten Sicherungsring abhängig. Grundsätzlich bietet die erfindungsgemäße Lösung den Vorteil, das sowohl die Druckplatte als auch der darin eingestanzte Lagersitz aus einem Blech gestanzt werden können. Der Prozess des Stanzens ist dabei flexibel anpassbar und kann so ausgeführt werden, dass die Druckplatte oder Zwischendruckplatte vollständig werkzeugfallend hergestellt wird. Beim Stanzen werden Flachteile beispielsweise aus Blechen mit einer Presse und einem Schneidwerkzeug gefertigt. Das dabei verwendete Trennverfahren ist das Scherschneiden, kann aber auch anders erfolgen, wobei hier auch jedes andere für den Einsatzzweck geeignetes Trennverfahren vorgesehen sein kann.

Das Prägen erfolgt mittels einer Presse, wobei die Tiefe und/oder die Form des Absatzes variabel ausgeführt werden kann und von der Ausführungsform des Lagers und/oder des Sicherungsringes abhängig ist. Je nach Verfahrensvariante kann das Prägen entweder in einem Arbeitsschritt mit dem Stanzen bzw. bei mehrstufigen Stanzverfahren mit einer der Stanzstufen oder in einem vom Stanzen getrennten Verfahrensschritt. Dabei ist die Reihenfolge der Verfahrensschritte unerheblich.

Grundsätzlich sollen unter der Prägung des Absatzes sämtliche mögliche Ausbildungsformen eines Absatzes, wie beispielsweise eine Stufe, eine Treppe, eine Ausnehmung, eine Wölbung, ein Tritt oder ähnliches verstanden werden. Auch die Ausgestaltung der Außenkante kann zwischen einer geraden Außenkante oder einer geneigten oder einer Kombination dieser beiden miteinander variieren. Ferner kann die Form des geprägten Absatzes variabel sein, so dass jede erdenkliche Ausführungsform wie zum Beispiel eine runde, eine eckig, eine oval oder eine sternförmig Ausführungsform des Absatzes möglich ist. Grundsätzlich ist das Prägen des Absatzes aber an die jeweilige Ausführungsform des Lagers und des Sicherungsringes anpassbar. Eine weitere Möglichkeit der Ausgestaltung des Absatzes liegt in der Oberflächenstruktur, welche durch das Prägen beeinflusst werden kann. So kann der Absatz beispielsweise eine aufgeraute Oberfläche aufweisen, wodurch eine verbesserte Kraftübertragung über den Sicherungsring möglich ist. Entscheidend ist, dass nach dem Stanzen und dem Prägen keinerlei spanende Bearbeitung mehr notwendig ist, weswegen das vorliegende Verfahren kostengünstiger ist als die Herstellung einer Druckplatte oder Zwischendruckplatte aus Guss.

Die vorliegende Erfindung betrifft ferner eine gestanzte Druckplatte mit den Merkmalen des Anspruchs 7, zur Verwendung in einer Reibkupplung, die nach einem erfindungsgemäßen Verfahren hergestellt wurde.

Weitere bevorzugte Merkmale, Anwendungsmöglichkeiten und Vorteile der Erfindung ergeben sich aus der nachfolgenden Beschreibung des Ausführungsbeispiels der Erfindung, welches in der Zeichnung dargestellt ist. Im Folgenden werden gleiche Bauteile mit gleichen Bezugszeichen bezeichnet. Es zeigen:
- Figur 1: eine schematische perspektivische Ansicht einer erfindungsgemäß hergestellten Druckplatte;
- Figur 2: einen schematisch perspektivischen Längsschnitt der in Fig. 1 gezeigten Druckplatte entlang der Linie A-A;
- Figur 3: eine schematische Ansicht eines Teilbereichs der Druckplatte mit der zentralen Ausnehmung und einem geprägten Absatz;
- Figur 4: eine schematische Ansicht eines Teilbereichs der Druckplatte mit aufgenommenem Stützlager

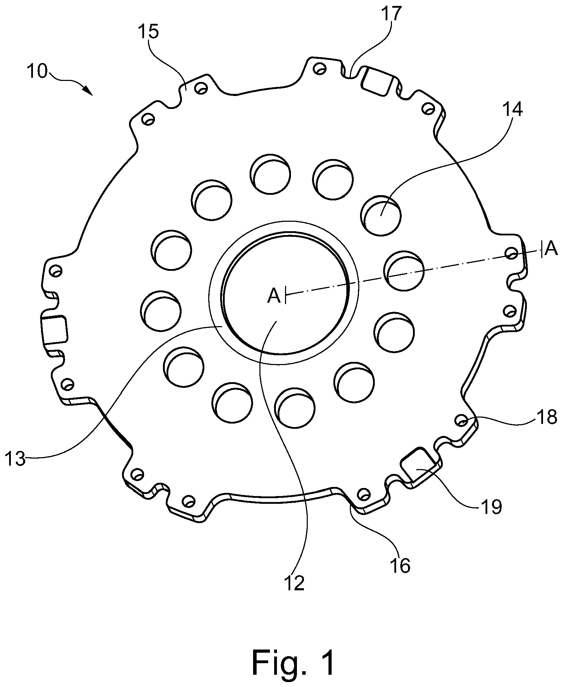

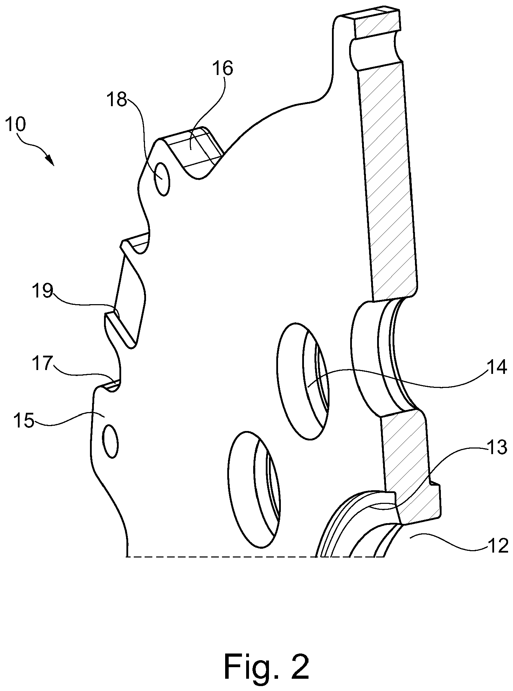

Die in Fig. 1 und 2 gezeigte Druckplatte 10 für eine Druckplattenbaugruppe einer Reibungskupplung, insbesondere für eine Trockenkupplung im Antriebsstrang eines Kraftfahrzeuges, ist aus Blech gestanzt. Die Druckplatte kann auch als Zwischendruckplatte eingebaut werden. Zur besseren Veranschaulichung kann die Druckplatte 10 radial in vier unterschiedliche Bereiche unterteilt werden. Radial innen befindet sich eine kreisförmige zentrale Ausnehmung 12 zur Aufnahme eines Lagers 20. Der Randbereich der zentralen Ausnehmung 12 weist eine Absatz 13 zur Aufnahme eines Sicherungsringes 22 des Lagers 20 auf. Der Absatz 13 ist in die Druckplatte 10 eingeprägt. Auf diese Weise kann der Sicherungsring 22 des Lagers 20 von dem Absatz 13 derart aufgenommen werden, dass Einrückkräfte der Kupplung über die Druckplatte 10 in das Lager 20 eingeleitet werden können und zum anderen der Sicherungsring 22 unter Drehzahl durch die Fliehkraft nicht aufgehen kann. Die Prägung der Druckplatte 10 kann variabel erfolgen und ist zum einen von der Ausgestaltung des in die Druckplatte 10 aufzunehmenden Lagers 20 und zum anderen von dem am Lager 20 angebrachten Sicherungsring 22 abhängig.

Der Prozess des Stanzens ist flexibel anpassbar und kann derart ausgeführt werden, dass die Druckplatte 10 vollständig werkzeugfallend hergestellt wird. Beim Stanzen werden beispielsweise die Flachteile aus Blechen mit einer Presse und einem Schneidwerkzeug gefertigt. Das dabei verwendete Trennverfahren ist das Scherschneiden. Das Stanzen kann ein- oder mehrstufig durchgeführt werden, so dass die jeweiligen Verfahrensschritte des Austanzens der Druckplatte 10 und des Ausstanzens der zentralen Ausnehmung 12 jeweils getrennt voneinander oder in einer beliebigen Reihenfolge nacheinander erfolgen können. Sowohl die Druckplatte 10 als auch die zentrale Ausnehmung 12 können ein- oder mehrstufig gestanzt werden. Zusätzlich können Bereiche gleichzeitig gebogen oder anderweitig plastisch verformt werden, man spricht dann von Stanzbiegen.

Das Prägen erfolgt mittels einer Presse, wobei die Tiefe und/oder die Form des Absatzes 13 variabel ausgeführt werden können und von der Ausführungsform des Lagers 20 und/oder des Sicherungsringes 22 abhängig ist. Je nach Verfahrensvariante kann das Prägen entweder in einem Arbeitsschritt mit dem Stanzen bzw. bei mehrstufigen Stanzverfahren mit einer der Stanzstufen oder in einem vom Stanzen getrennten Verfahrensschritt erfolgen. Dabei ist die Reihenfolge der Verfahrensschritte unerheblich. Nach dem Stanzen und dem Prägen ist keinerlei spanende Bearbeitung mehr notwendig, weswegen das vorliegende Verfahren kostengünstiger und schneller ist als die Herstellung einer Druckplatte 10 oder Zwischendruckplatte aus Guss.

Radial außen an den innen liegenden Bereich der zentralen Ausnehmung 12 schließt sich als zweiter radialer Bereich ein Abschnitt mit einer Vielzahl von Aussparungen 14 an. Diese Aussparungen 14 sind im Wesentlichen rund ausgebildet. Die einzelnen Aussparungen 14 sind so um die kreisförmige zentrale Ausnehmung 12 herum angeordnet, dass die einzelnen Aussparungen 14 jeweils den gleichen Abstand zu der kreisförmigen zentralen Ausnehmung 12 aufweisen. Außerdem sind die Aussparungen 14 derart gleichmäßig um die kreisförmige zentrale Ausnehmung 12 angeordnet, dass zwischen den einzelnen Aussparungen 14 jeweils der gleiche Abstand ist. Grundsätzlich sind die genannten Aussparungen 14 nicht zwingend notwendig. Sie dienen einer verbesserten Belüftung der einzelnen Teilkupplungen und können je nach Ausführungsform der Druckplatte 10 in ihrer Art und Form variieren.

Radial außen an den Bereich der Aussparungen 14 schließt sich ein weiterer Bereich an. Dieser Bereich weist in der dargestellten Ausführungsform eine durchgehende Oberfläche auf, die weder Erhöhungen, Vertiefungen oder Aussparungen umfasst. Sie kann als Reibfläche der Zentralplatte dienen, wobei auch das Einbringen einer zusätzliche Prägung, wie beispielsweise eine Seriennummer oder ein Herstellerlogo, möglich ist.

Radial außerhalb an den Bereich mit der durchgehenden Oberfläche schließt sich ein weiterer Bereich an, der mehrere Ausstülpungen 15 aufweist, die sich von dem vorhergehenden Bereich radial nach außen erstrecken. Auf der Umfangsrichtung der Druckplatte 10 verteilt liegen abwechselnd Gruppen von zwei und drei benachbarte Ausstülpungen 15. Dabei handelt es sich um mögliche Vernietungsflächen zu benachbarten Bauteilen, wobei deren Ausführungsformen variieren können. Im dargestellten Ausführungsbeispiel ist der Abstand zwischen den Gruppen von Ausstülpungen 15 jeweils abwechselnd etwas kleiner und etwas größer. Auf dem gesamten Umfang befinden sich jeweils drei Gruppen von zwei benachbarten Ausstülpungen 15 und jeweils drei Gruppen von drei benachbarten Ausstülpungen 15. Die Ausstülpungen 15 sind so ausgebildet, dass die jeweils von der Gruppe weg weisenden Bereiche der Ausstülpungen 15 eine im wesentlichen gerade Kante 16 aufweisen. Bei den benachbarten Ausstülpungen 15 sind die nach innen weisenden Kanten abgerundet, wodurch sich zwischen den Ausstülpungen 15 jeweils eine abgerundete Einbuchtung 17 ergibt. Die Ausstülpungen 15 der drei Gruppen von zwei benachbarten Ausstülpungen 15 weisen jeweils eine Durchtrittsöffnung 18 auf. Bei den drei Gruppen von drei benachbarten Ausstülpungen 15 weisen jeweils die beiden äußeren Ausstülpungen 15 eine Durchtrittsöffnung 18 auf, wohingegen die mittlere Ausstülpung eine im wesentlichen rechteckige Vertiefung 19 aufweist, die nach radial außen geöffnet ist. Die Druckplatte 10 oder Zwischendruckplatte kann sowohl radial als auch in axialer Richtung fixiert werden.

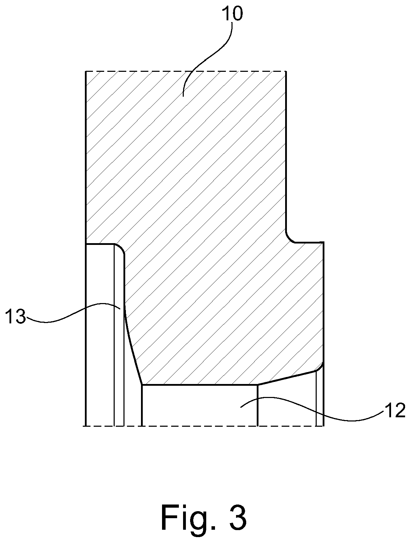

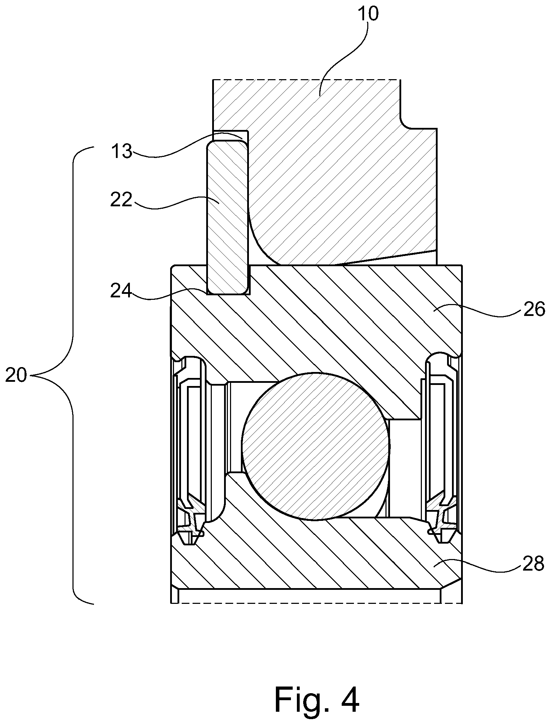

Figur 3 zeigt eine schematische Ansicht eines Teilbereichs der Druckplatte 10. Die zentrale Ausnehmung 12 weist einen geprägten Absatz 13 auf. Figur 4 zeigt wie in Figur 3 die schematische Ansicht eines Teilbereichs der Druckplatte 10 allerdings mit einem in die zentrale Ausnehmung 12 aufgenommenem Lager 20. Grundsätzlich ist das Lager 20 über eine Presspassung in der zentralen Ausnehmung 12 fixiert. Alternativ denkbar ist aus fertigungstechnischen Gründen auch eine lose Passung oder eine Spielpassung. Allerdings wäre dann das Lager 20 in der zentralen Ausnehmung 12 solange nicht fixiert, solange die Doppelkupplung noch nicht über den Sicherungsring 22 auf der Getriebeeingangswelle gehalten und somit die Doppelkupplung gegenüber dem Getriebe über diesen Sicherungsring in Verbindung mit dem Ausrücksystem verspannt ist. Im dargestellten Ausführungsbeispiels ist das Lager 20 ein Kugellager, wobei hier auch jeder andere für den Einsatzzweck geeignetes Wälzlagertyp vorgesehen sein kann.

Das Lager weist einen Lageraußenring 26 und einen Lagerinnenring 28 auf. Der Sicherungsring 22 ist zudem in einer in Umfangsrichtung des Lagers 20 ausgebildeten Nut 24 im Lageraußenring 26 des Lagers 20 aufgenommen, so dass das eingesetzte Lager 20 zumindest in eine Richtung axial festgelegt ist. Auf diese Weise kann die Abstützung der Einrückkräfte über den Sicherungsring 22 erfolgen. Der Sicherungsring 22 kann vormontiert mit dem Lager 20 geliefert werden, so dass das Lager 20 bei der Montage direkt in die Druckplatte 10 eingepresst werden kann. Damit der Sicherungsring 22 am Lager 20 angebracht werden kann, muss der Sicherungsring 22 geschlitzt sein. Die Schlitzung des Sicherungsringes 22 hat den Nachteil, dass der Sicherungsring 22 bei hoher Drehzahl durch die Fliehkraft aufgeht, wodurch ein sicherer Betrieb nicht gewährleistet werden kann. Der in die Druckplatte 10 eingeprägte Absatz 13 nimmt den Sicherungsring 22 derart auf, dass der Außendurchmesser des eingeprägten Absatzes 13 als Fliehkraftsicherung für den Sicherungsring 22 dient. Der Verfahrensschritt des Prägen und Stanzen, bzw. die Verfahrensschritte des Prägen und Stanzen des Absatzes 13 können derart ausgeführt werden, dass die Tiefe und/oder die Form des Absatzes 13 variabel sein kann und an die jeweilige Ausführungsform des einzusetzenden Lagers 20 und/oder des Sicherungsringes 22 anpassbar ist.

Eine in den Figuren 1 bis 4 dargestellte Druckplatte 10 oder Zwischendruckplatte kann beispielsweise in einer Drehmomentübertragungseinrichtung eingesetzt werden. Alternativ könnte die Druckplatte 10 oder Zwischendruckplatte auch in einer anderen Reibungskupplung, beispielsweise in Zweischeibentrockenkupplung eingesetzt werden.

Die Erfindung ist nicht auf die beschriebenen Ausführungsbeispiele beschränkt, sondern umfasst auch gleichwirkende weitere Ausführungsformen, die unter das in den Ansprüchen definierte Schutzbegehren der vorliegenden Erfindung fallen. Die Figurenbeschreibung dient lediglich dem Verständnis der Erfindung.

### Bezugszeichenliste

- 10: Druckplatte, Zwischendruckplatte
- 12: zentrale Ausnehmung
- 13: geprägter Absatz
- 14: Aussparung
- 15: Ausstülpung
- 16: Kante
- 17: Einbuchtung
- 18: Durchtrittsöffnung
- 19: Vertiefung
- 20: Lager; Stützlager
- 22: Sicherungsring

## Patentansprüche

1. Verfahren zur Herstellung einer Druckplatte (10) für eine Druckplattenbaugruppe einer Reibungskupplung, insbesondere für eine Trockenkupplung im Antriebsstrang eines Kraftfahrzeuges, mit folgenden Verfahrensschritten:
a) Stanzen der Druckplatte (10) aus einem Blech,
b) Stanzen einer zentralen Ausnehmung (12) als Lagersitz zur Aufnahme eines Lagers (20) in die Druckplatte (10),
**gekennzeichnet durch**:
c) Prägen eines Absatz (13) im Bereich der zentralen Ausnehmung (12) zur Aufnahme eines Sicherungsringes (22) des Lagers (20).

2. Verfahren nach Anspruch 1, **dadurch gekennzeichnet, dass** Prägen des Absatzes (13) in seiner Tiefe und/oder seiner Form variabel ausgeführt werden kann und von der Ausführungsform des einzusetzenden Lagers (20) und/oder des Sicherungsringes (22) und/oder des Montageverfahrens abhängig ist.

3. Verfahren nach einem der Ansprüche 1 oder 2, **dadurch gekennzeichnet, dass** Schritt a) und Schritt b) in einem einzigen Verfahrensschritt erfolgen.

4. Verfahren nach einem der Ansprüche 1 oder 2, **dadurch gekennzeichnet, dass** ein kombiniertes Stanzen und Prägen in den Schritten b) und c) stattfindet.

5. Verfahren nach einem der Ansprüche 1 oder 2, **dadurch gekennzeichnet, dass** ein kombiniertes Stanzen und Prägen in den Schritten a) und c) stattfindet.

6. Verfahren nach einem der Ansprüche 1 oder 2, **dadurch gekennzeichnet, dass** ein kombiniertes Stanzen und Prägen in den Schritten a), b) und c) stattfindet.

7. Gestanzte Druckplatte (10) hergestellt nach einem Verfahren gemäß den Ansprüchen 1 bis 6 zur Verwendung in einer Reibkupplung, aufweisend eine zentrale Ausnehmung zur Aufnahme eines Lagers (20) mit einem Sicherungsring (22); und einen eingeprägten Absatz (13) im Bereich der zentralen Ausnehmung (12) zur Aufnahme des Sicherungsringes (22).

## Claims

1. Method for producing a pressure plate (10) for a pressure plate assembly of a friction clutch, in particular for a dry-running clutch in the drivetrain of a motor vehicle, having the following method steps:
a) punching the pressure plate (10) out of a metal sheet,
b) punching a central recess (12) as a bearing seat for receiving a bearing (20) into the pressure plate (10),
**characterized by**
c) stamping a shoulder (13) in the region of the central recess (12) for the purposes of receiving a securing ring (22) of the bearing (20) .

2. Method according to Claim 1, **characterized in that** stamping of the shoulder (13) can be performed in a variable manner in terms of the depth and/or shape thereof, and is dependent on the embodiment of the bearing (20) to be used and/or of the securing ring (22) and/or of the assembly method.

3. Method according to either of Claims 1 and 2, **characterized in that** step a) and step b) take place in a single method step.

4. Method according to either of Claims 1 and 2, **characterized in that** combined punching and stamping takes place in steps b) and c).

5. Method according to either of Claims 1 and 2, **characterized in that** combined punching and stamping takes place in steps a) and c).

6. Method according to either of Claims 1 and 2, **characterized in that** combined punching and stamping takes place in steps a), b) and c).

7. Punched pressure plate (10) produced in accordance with a method according to Claims 1 to 6 for use in a friction clutch, having a central recess for receiving a bearing (20) with a securing ring (22); and having a stamped shoulder (13) in the region of the central recess (12) for the purposes of receiving the securing ring (22).

## Revendications

1. Procédé de fabrication d'un plateau de pression (10) pour un module de plateau de pression d'un embrayage à friction, en particulier pour un embrayage à sec dans la chaîne cinématique d'un véhicule automobile, comprenant les étapes de procédé suivantes :
a) estampage du plateau de pression (10) dans une tôle,
b) estampage d'un évidement central (12) en tant que siège de palier pour recevoir un palier (20) dans le plateau de pression (10),
**caractérisé par** :
c) l'impression d'un épaulement (13) dans la région de l'évidement central (12) pour recevoir une bague de fixation (22) du palier (20) .

2. Procédé selon la revendication 1, **caractérisé en ce que** l'impression de l'épaulement (13) peut être réalisée avec une profondeur et/ou une forme variables, et dépend du mode de réalisation du palier à utiliser (20) et/ou de la bague de fixation (22) et/ou du procédé de montage.

3. Procédé selon l'une quelconque des revendications 1 ou 2, **caractérisé en ce que** l'étape a) et l'étape b) sont effectuées en une seule étape de procédé.

4. Procédé selon l'une quelconque des revendications 1 ou 2, **caractérisé en ce qu'**un estampage et une impression combinés ont lieu aux étapes b) et c).

5. Procédé selon l'une quelconque des revendications 1 ou 2, **caractérisé en ce qu'**un estampage et une impression combinés ont lieu aux étapes a) et c).

6. Procédé selon l'une quelconque des revendications 1 ou 2, **caractérisé en ce qu'**un estampage et une impression combinés ont lieu aux étapes a), b) et c) .

7. Plateau de pression estampé (10) fabriqué selon un procédé selon les revendications 1 à 6, pour l'utilisation dans un embrayage à friction, présentant un évidement central pour recevoir un palier (20) avec une bague de fixation (22) ; et un épaulement (13) imprimé dans la région de l'évidement central (12) pour recevoir la bague de fixation (22).
